# EUROPÄISCHE PATENTSCHRIFT

(11) **EP 3 212 956 B1**
(45) Veröffentlichungstag und Bekanntmachung des Hinweises auf die Patenterteilung: **26.02.2020**
(21) Anmeldenummer: 15778660.9
(22) Anmeldetag: 09.10.2015
(51) Int. Cl.: F16D 55/227

(54) **AUS GUSSEISEN BESTEHENDER BREMSSATTEL EINER SCHEIBENBREMSE**
BRAKE CALIPER MADE FROM CAST IRON OF A DISC BRAKE
ÉTRIER DE FREIN EN FONTE D'UN FREIN À DISQUE

(30) Priorität: 30.10.2014 DE 102014115764
(43) Veröffentlichungstag der Anmeldung: 06.09.2017
(73) Patentinhaber: KNORR-BREMSE Systeme für Nutzfahrzeuge GmbH, 80809 München (DE)
(72) Erfinder: STÖGER, Christian, 94486 Osterhofen (DE)
(86) Internationale Anmeldenummer: PCT/EP2015/073464
(87) Internationale Veröffentlichungsnummer: WO 2016/066408

(56) Entgegenhaltungen:
- EP-A1- 1 462 671
- EP-A1- 1 805 429
- EP-A1- 2 644 927
- WO-A1-2015/114353
- WO-A1-2016/034377
- DE-A1-102008 055 860
- DE-A1-102013 100 173

## Beschreibung

Die Erfindung betrifft einen aus Gusseisen bestehenden Bremssattel einer Scheibenbremse nach dem Oberbegriff des Anspruchs 1.

Der Bremssattel einer solchen Scheibenbremse dient zum einen der Lagerung von Funktionsteilen, die zum Betrieb der Scheibenbremse erforderlich sind, und zum anderen der Aufnahme von Kräften, wie sie beim Bremsen auftreten.

Zu den Funktionsteilen zählt u.a. eine Zuspanneinrichtung, die in einer von einem Gehäuse umhüllten Aufnahmekammer des Bremssattels angeordnet ist, wobei das Gehäuse Bestandteil eines Sattelkopfes ist, während gegenüberliegend ein Sattelrücken ausgeformt ist, an dem sich ein reaktionsseitiger Bremsbelag abstützt.

Der Sattelkopf und der Sattelrücken sind durch zwei parallel und abständig zueinander angeordnete, den Bremssattel seitlich begrenzende Zugstreben miteinander verbunden.

Die Zuspanneinrichtung beinhaltet einen pneumatisch oder elektromechanisch verschwenkbaren Bremshebel, der sich einerseits am Sattelkopf und andererseits an einer Brücke abstützt, die mindestens einen Bremsstempel aufweist, mit dem ein aktionsseitiger Bremsbelag gegen eine fahrzeugseitige Bremsscheibe pressbar ist.

Dabei wird bei Betätigung der Bremse, also einem Verschwenken des Bremshebels, die Brücke und damit der Bremsstempel gegen den Bremsbelag und in der Folge dieser gegen die Bremsscheibe gepresst, woraufhin bei einem als Schiebesattel ausgebildeten Bremssattel aufgrund der auftretenden Reaktionskräfte der Bremssattel unter Mitnahme des reaktionsseitigen Bremsbelages in Richtung der Bremsscheibe verfährt, bis beide Bremsbeläge bremsend an der Bremsscheibe anliegen.

Der Bremssattel muss daher eine ausreichende Festigkeit aufweisen, um die auftretenden Kräfte aufnehmen zu können. Hierzu ist der bekannte Bremssattel einstückig als Gussteil ausgebildet und entsprechend dimensioniert.

Allerdings führt die beim Bremsen aufgebrachte Zuspannkraft im Bremssattel zu einer Verformung, aus der sich Spannungen ergeben. Aus Gründen der Betriebssicherheit muss der Bremssattel so ausgelegt sein, dass er eine definierte Anzahl von Lastwechseln dynamischer Belastung trägt, bevor Materialbruch eintritt.

Wie sich gezeigt hat, sind insbesondere im Sattelkopf befindliche Bereiche des Bremssattels besonders stark belastet, die häufig eine erste Stelle für einen Riss des Bremssattels bilden.

Zur Befestigung des Bremssattels an einem ortsfesten, fahrzeugseitigen Bremsträger sind Befestigungselemente vorgesehen, die als Gleitlager ausgebildet sind, von denen eines als Los- und das andere als Festlager fungiert, jeweils mit einem am Bremsträger gehaltenen Führungsholm, auf der der Bremssattel, bezogen auf die Bremsscheibe axial verschiebbar gelagert ist.

Dabei übernimmt das Festlager im Wesentlichen Führungsfunktion, während das Loslager dem Ausgleich von Toleranzen dient. Die Führungsholme sind jeweils in einer Führungsbuchse des Bremssattels gelagert, die in einer Lagerbohrung axial gesichert im Bremssattel gehalten ist.

Um eine ausreichende Führungslänge zu erhalten, ist die Lagerbohrung in einem über den Sattelkopf vorstehenden Stutzen vorgesehen, der über eine Rippe mit dem abständig benachbarten Gehäuse verbunden ist, die sich über den Stutzen hinweg bis in einen äußeren Randbereich des Sattelkopfes geführt ist, wie es beispielsweise aus der DE 10 2008 055 860 A1 oder der EP 1 462 671 A1 bekannt ist.

Der Erfindung liegt die Aufgabe zugrunde, einen Bremssattel der gattungsgemäßen Art so weiterzuentwickeln, dass mit geringem konstruktiven und fertigungstechnischen Aufwand seine Belastungsfähigkeit erhöht und die Standzeit verlängert wird.

Diese Aufgabe wird durch einen Bremssattel mit den Merkmalen des Anspruchs 1 gelöst.

Wie sich überraschend gezeigt hat, wird durch die erfindungsgemäße Ausbildung des einstückigen Bremssattels, nach der die Rippe im Abstandsbereich zwischen dem Stutzen und dem Gehäuse eine sich zur Unterseite hin verjüngende Verdickung aufweist, eine derartige Entlastung der zuvor beschriebenen Problemzonen erreicht, dass die Gefahr einer Rissbildung in dem hoch beanspruchten Bereich zumindest so weit minimiert ist, dass sie, wenn überhaupt, erst nach einer deutlich längeren Nutzungsdauer der Scheibenbremse, d.h. einer deutlich höheren Anzahl an Lastwechseln eintritt.

Dabei ist besonders hervorzuheben, dass die konstruktive Ausbildung im Sinne der Erfindung praktisch kostenneutral zu realisieren ist, da lediglich eine Anpassung der Gussform zu erfolgen hat, wobei der zusätzliche Materialeinsatz an Gusseisen hinsichtlich der Kosten vernachlässigbar ist.

Nach einem weiteren Gedanken der Erfindung ist die Rippe zweistufig treppenartig ausgebildet, wobei jede quasi Stufenfläche über den Stutzen bis in einen äußeren Randbereich des Sattelkopfes geführt ist.

Die Rippe ist in ihrer Höhe im Bereich zwischen dem Stutzen und dem Gehäuse zumindest teilweise so bemessen, dass sie sie in einem wesentlichen Außenumfangsbereich des Stutzens anliegt, andererseits am Gehäuse angeschlossen ist.

Bevorzugt ist die Rippe, ausgehend vom Gehäuse, schräg über den Stutzen geführt bis hin zur Zugstrebe, d.h., bis in einen der Zugstrebe zugewandten Endbereich des Sattelkopfes.

Prinzipiell ist durch die Erfindung ein belastungsoptimierter Bremssattel geschaffen, der bei geringstmöglichem Materialeinsatz eine größtmögliche Festigkeit in allen relevanten Bereichen aufweist.

Die insoweit filigrane Ausformung des Bremssattels führt letztendlich auch zu einer Minimierung des Gewichtes, einer steten Forderung, der durch die Erfindung auf eindrucksvolle Weise gefolgt wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Bremssattel nach dem Stand der Technik in einer Draufsicht
- Figur 2: einen Bremssattel gemäß der Erfindung, ebenfalls in einer Draufsicht
- Figur 3: einen Teilausschnitt des Bremssattels nach Figur 1 in einer perspektivischen Ansicht
- Figur 4: den Teilausschnitt nach Figur 3 in einer Unteransicht.

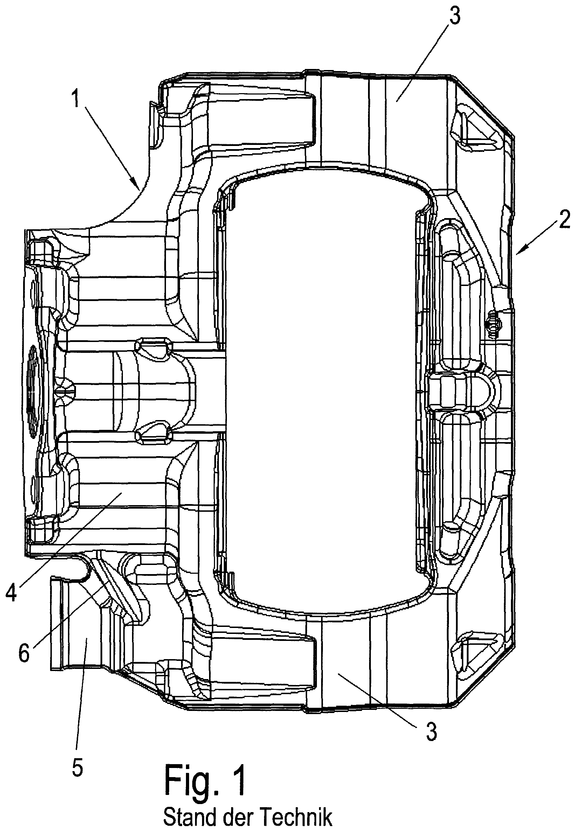

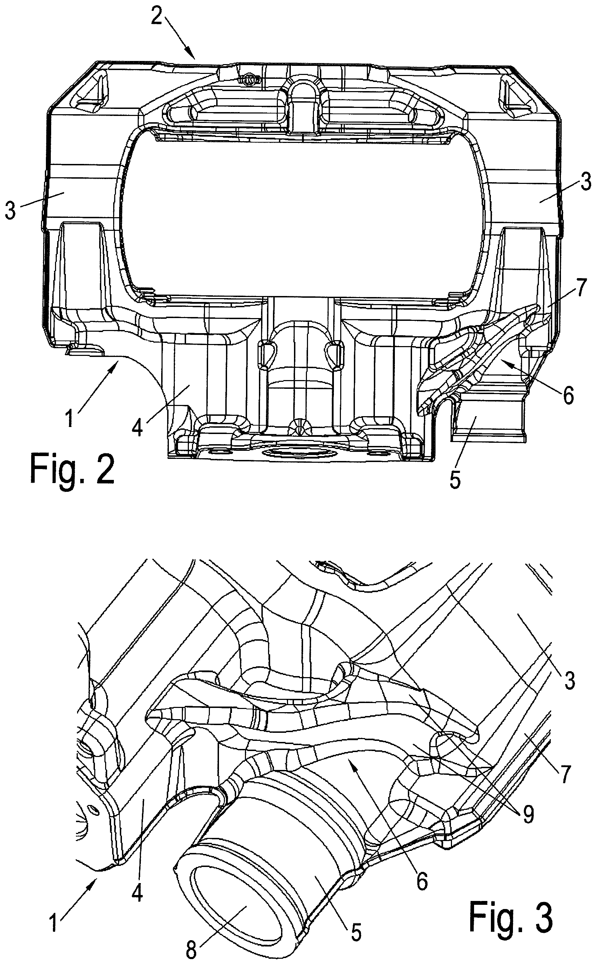

In der Figur 1 ist ein Bremssattel nach dem Stand der Technik abgebildet, der in seinem Grundaufbau dem erfindungsgemäßen nach Figur 2 entspricht.

Dabei besteht der Bremssattel aus einem Sattelkopf 1 mit einem eine Aufnahmekammer für Funktionsteile umhüllenden Gehäuse 4, einem gegenüberliegenden Sattelrücken 2 sowie zwei parallel und abständig zueinander angeordneten, den Sattelkopf 1 und den Sattelrücken 2 miteinander verbindenden Zugstreben 3.

Zur Aufnahme eines Gleitlagers, das als Festlager ausgebildet ist und das drin mit einem weiteren, nicht dargestellten Loslager der Befestigung des Bremssattels an einem fahrzeugseitigen Bremsträger dient, um den Bremssattel, der als Schiebesattel ausgebildet ist, verschieblich zu halten, ist ein Stutzen 5 mit einer Lagerbohrung 8 an den Bremssattel angeformt, wobei der Stutzen 5 vorsteht und abständig zum Gehäuse 4 verläuft.

Zur Aufnahme von beim Bremsen auf den Bremssattel einwirkenden Verformungskräften ist der Stutzen 5 mittels einer angeformten Rippe 6 mit dem Gehäuse 4 verbunden. Wie die Figur 1 sehr deutlich wiedergibt, erstreckt sich die Rippe 6 bei einem bekannten Bremssattel, ausgehend vom Gehäuse 4, bis in einen Mittenbereich des Stutzens 5, also etwa bis zu dessen Mittelachse.

Demgegenüber ist die Rippe 6 gemäß der Erfindung, wie sie in den Figuren 2-4 zu erkennen ist, über den Stutzen 5 hinweg geführt bis in einen äußeren Randbereich 7 des Sattelkopfes 1, wobei die Rippe 6, wie beim Stand der Technik, auch hier auf der in montierter Stellung Oberseite des Bremssattels positioniert ist.

Insbesondere aus der Figur 3 ist zu erkennen, dass die Rippe 6 nach Art einer Treppe zweistufig ausgebildet ist, mit zwei Stufenflächen 9, die beide bis in den Randbereich 7 reichen.

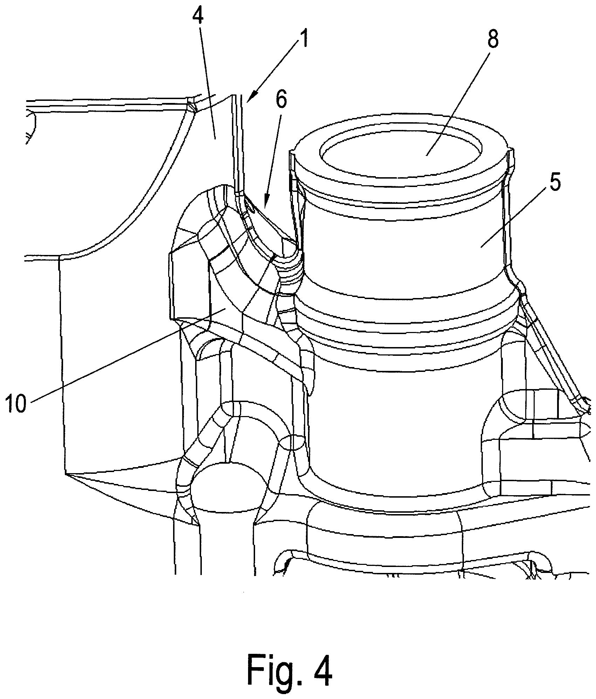

In der Figur 4 ist ein Teilausschnitt des Bremssattels als Unteransicht abgebildet. Darin ist zu erkennen, dass die Rippe 6 im Abstandsbereich zwischen dem Gehäuse 4 und dem Stutzen 5 als Verdickung 10 gestaltet ist, deren Höhe so bemessen ist, dass sie einen größeren umfänglichen Teil des Stutzens 5 überdeckt, wobei die Verdickung 10 Bestandteil einer ersten Stufe der Rippe 6 ist, die unmittelbar am Stutzen 5 anliegt.

Hinsichtlich der Breite der Verdickung 10, also des Abstands zwischen dem Gehäuse 4 und dem Stutzen 5 verjüngt sich die Verdickung von der Oberseite, d.h. von der unteren Stufenfläche 9 zur Unterseite hin. Damit wird eine Optimierung zwischen Materialeinsatz und Belastbarkeit erreicht.

## Patentansprüche

1. Aus Gusseisen bestehender einstückiger Bremssattel einer Scheibenbremse, mit einem Sattelrücken (2) und einem damit über parallel und abständig zueinander angeordnete Zugstreben (3) verbundenen Sattelkopf (1), wobei dieser ein eine Aufnahmekammer für Funktionsteile umhüllendes Gehäuse (4) aufweist sowie abständig und benachbart dazu einen angeformten, vorstehenden und eine Lagerbohrung (8) für ein Festlager aufnehmenden Stutzen (5), der mittels einer angeformten Rippe (6) mit dem Gehäuse (4) verbunden ist, wobei die Rippe (6) über den Stutzen (5) bis in einen äußeren Randbereich (7) des Sattelkopfes (1) geführt ist, **dadurch gekennzeichnet, dass** die Rippe (6) im Abstandsbereich zwischen dem Stutzen (5) und dem Gehäuse (4) eine sich zur Unterseite hin verjüngende Verdickung (10) aufweist.

2. Bremssattel nach Anspruch 1, **dadurch gekennzeichnet, dass** die Rippe (6) schräg bis zur zugeordneten Zugstrebe (3) verläuft.

3. Bremssattel nach Anspruch 1 oder 2, **dadurch gekennzeichnet, dass** die Rippe (6) mehrstufig, vorzugsweise zweistufig mit Stufenflächen (9) ausgebildet ist.

4. Bremssattel nach einem der vorhergehenden Ansprüche, **dadurch gekennzeichnet, dass** die Verdickung (10) in ihrer Höhe so bemessen ist, dass sie einen wesentlichen Umfangsbereich des Stutzens (5) bedeckt.

## Claims

1. A one-piece cast iron brake calliper of a disc brake having a calliper back (2) and a calliper head (1) that is connected to the calliper back (2) by means of tension struts (3) arranged parallel to and at a distance from one another, the calliper head (1) having a housing (4) that encloses a receiving chamber for functional parts and having adjacent to and at a distance from this housing (4) a moulded-on, projecting connecting piece (5) that receives a bearing bore (8) for a fixed bearing and is connected to the housing (4) by a moulded-on rib (6), the rib (6) running past via the connecting piece (5) to an outer edge region (7) of the calliper head (1), **characterised in that** in the gap between the connecting piece (5) and the housing (4) the rib (6) has a thicker section (10) that tapers towards the underside.

2. A brake calliper according to claim 1, **characterised in that** the rib (6) runs diagonally as far as its associated tension strut (3).

3. A brake calliper according to claim 1 or 2, **characterised in that** the rib (6) is multi-stepped, preferably two-stepped, in design with step surfaces (9).

4. A brake calliper according to any one of the preceding claims, **characterised in that** the height of the thicker region (10) is dimensioned so as to cover a substantial circumferential region of the connecting piece (5).

## Revendications

1. Etrier de frein d'une seule pièce en fonte d'un frein à disque, comprenant un dos (2) d'étrier et une tête (1) d'étrier, qui y est reliée par des tirants (3) disposés parallèlement et à distance les uns des autres, la tête ayant un boîtier (4) enveloppant une chambre de réception de parties fonctionnelles, ainsi qu'à distance et au voisinage de cela, une tubulure (5) venue de matière, en saillie et ayant un alésage (8) pour un palier fixe, tubulure qui est reliée, au moyen d'une nervure (6) venue de matière, au boîtier (4), la nervure (6) étant guidée par la tubulure (5) jusque dans une partie (7) de bord extérieur de la tête (1) de l'étrier, **caractérisé en ce que** la nervure (6) a, dans la partie à distance, entre la tubulure (5) et le boîtier (4), un épaississement (10) se rétrécissant vers le côté inférieur.

2. Etrier de frein suivant la revendication 1, **caractérisé en ce que** la nervure (6) s'étend de manière inclinée jusqu'au tirant (3) associé.

3. Etrier de frein suivant la revendication 1 ou 2, **caractérisé en ce que** la nervure (6) est constituée en plusieurs degrés, de préférence en deux degrés ayant des girons (9).

4. Etrier de frein suivant l'une des revendications précédentes, **caractérisé en ce que** l'épaississement (10) a une hauteur telle qu'il recouvre une partie essentielle du pourtour de la tubulure (5).
